# EUROPÄISCHE PATENTANMELDUNG

(11) **EP 3 835 841 A1**
(43) Veröffentlichungstag der Anmeldung: **16.06.2021**
(21) Anmeldenummer: 20211441.9
(22) Anmeldetag: 03.12.2020
(51) Int. Cl.: G02B 6/50, H02G 9/06, H02G 9/10, G02B 6/44, H02G 1/06

(54) **VERWENDUNG EINES ANSCHLUSSGEHÄUSES**

(30) Priorität: 10.12.2019 DE 102019133706; 29.05.2020 DE 102020003258
(71) Anmelder: Hauff-Technik GmbH & Co. KG, 89568 Hermaringen (DE)
(72) Erfinder: SCHMID, Jörg, 89129 Langenau (DE); SCHEURING, Horst, 89542 Herbrechtingen (DE); KURZ, Ralf, 89537 Giengen (DE)
(74) Vertreter: König Szynka Tilmann von Renesse Patentanwälte Partnerschaft mbB

(57) **Zusammenfassung**

Verwendung eines Anschlussgehäuses (2) zum Bereitstellen einer Datenkabelanbindung, wobei
i) das Anschlussgehäuse (2), das einen Gehäuseinnenraum (4) begrenzt, in einen Boden (35) eingebaut wird,
ii) in dem Boden (35) ein Datenkabel (70) solchermaßen verlegt wird, dass ein endseitiger Anschlussabschnitt (70.1) des Datenkabels (70) in den Gehäuseinnenraum (4) mündet,
iii) der Anschlussabschnitt (70.1) des Datenkabels (70) zumindest abschnittsweise in einem Leerrohrsystem (45) verlegt ist, welches Leerrohrsystem (45) einen ersten Leerrohrabschnitt (51) und, in einer Längsrichtung des Datenkabels (70) zu dessen Ende (70.1.1) hin darauffolgend, einen zweiten Leerrohrabschnitt (52) aufweist,
iv) der zweite Leerrohrabschnitt (52) von dem Datenkabel (70) abgenommen wird, bevor dieses an ein dann in dem Anschlussgehäuse (2) angeordnetes Kabelgehäuse (80) angeschlossen wird.

## Beschreibung

Die vorliegende Erfindung betrifft die Verwendung eines Anschlussgehäuses zum Bereitstellen einer Datenkabelanbindung.

Wie nachstehend im Einzelnen diskutiert, kann mit dem Anschlussgehäuse ein Zugangspunkt geschaffen werden, was die Anbindung an ein Datenkabelnetz erleichtern kann. Dazu wird das Anschlussgehäuse zwischen einer Datenkabel-Verzweigungsstelle und der Datennutzer- oder Datenverteilerstelle im Boden platziert, also bspw. zwischen einem entlang der Straße im Erdreich verlaufenden Kabel- bzw. Leerrohrstrang und dem anzuschließenden Gebäude. Bevorzugt wird das Anschlussgehäuse solchermaßen in den Boden eingebaut, dass der Gehäuseinnenraum von oben zugänglich bleibt, also kein Aufgraben notwendig ist. Wird im Zuge der Erschließung dann bei sämtlichen Nutzer- bzw. Verteilerstellen jeweils ein Anschlussgehäuse platziert, können bspw. von einem übergeordneten Knotenpunkt aus, bspw. einem Verteilerkasten oder einer Spleißmuffe, die einzelnen Anschlussgehäuse effizient in einem Arbeitsdurchgang angebunden werden. Die "letzten Meter" zwischen dem Anschlussgehäuse und dem jeweiligen Gebäude können dann nach und nach, in Anpassung an die individuellen Anforderungen erfolgen (z. B. Bedarf oder Baufortschritt etc.). Dies soll ein mögliches und bevorzugtes Vorgehen illustrieren, den Gegenstand aber zunächst nicht in seiner Allgemeinheit beschränken.

Der vorliegenden Erfindung liegt das technische Problem zugrunde, eine vorteilhafte Verwendung eines Anschlussgehäuses anzugeben.

Dies wird erfindungsgemäß mit der Verwendung nach Anspruch 1 gelöst. Das Anschlussgehäuse wird in den Boden eingebaut (Ziffer i), vorzugsweise so, dass der Gehäuseinnenraum zugänglich bleibt, also ein Zugangspunkt geschaffen wird. Ferner wird in dem Boden ein Datenkabel derart verlegt, dass es in den Gehäuseinnenraum mündet (Ziffer ii)). Ein Anschlussabschnitt des Datenkabels erstreckt sich dann also in den Gehäuseinnenraum hinein (und kann für Anschlussarbeiten nach oben herausgenommen werden), wohingegen ein Anbindungsabschnitt außerhalb des Anschlussgehäuses im Boden verläuft, bspw. bis zu einem Verteilerkasten oder einer Spleißmuffe.

Der in den Gehäuseinnenraum mündende Anschlussabschnitt ist bzw. wird dabei in einem Leerrohrsystem verlegt, welches einen ersten und darauf folgend einen zweiten Leerrohrabschnitt aufweist. Über den ersten Leerrohrabschnitt kann das Leerrohrsystem bspw. an einer Wand des Anschlussgehäuses befestigt sein oder werden. Der zweite Leerrohrabschnitt, in dem entsprechend ein endseitiger Abschnitt des Anschlussabschnitts angeordnet ist, wird dann von dem Datenkabel abgenommen, bevor dieses an ein Kabelgehäuse angeschlossen wird (letzteres ist oder wird dann in dem Gehäuseinnenraum untergebracht). Damit wird also temporär mehr Leerrohr vorgesehen, als in der fertigen Installation benötigt, was z. B. das Einführen bzw. Einblasen des Datenkabels erleichtern und/oder einen gewissen Schutz bieten kann. Der Endabschnitt des Datenkabels lässt sich in dem Leerrohrsystem bspw. vorübergehend im Gehäuseinnenraum ablegen, bis dann später das Kabelgehäuse angeschlossen wird, siehe unten im Detail.

Bevorzugte Ausführungsformen finden sich in den abhängigen Ansprüchen und der gesamten Offenbarung, wobei in der Darstellung der Merkmale nicht immer im Einzelnen zwischen den unterschiedlichen Anspruchskategorien unterschieden wird; jedenfalls implizit ist die Offenbarung stets sowohl auf Verfahrens- bzw. Verwendungsaspekte als auch auf eine entsprechende Vorrichtung zu lesen. Wird bspw. eine bestimmte Verwendung beschrieben, ist dies zugleich als Offenbarung einer entsprechenden Kabelanbindungseinheit zu betrachten, die sich im Zuge der Verwendung ergibt, und umgekehrt.

Bevorzugt ist zwischen dem ersten und dem zweiten Leerrohrabschnitt eine Trennebene definiert, was das Abtrennen des zweiten Leerrohrabschnitts vereinfacht. Dieser lässt sich dann im Idealfall werkzeuglos, insbesondere ohne Schneidwerkzeug, von dem Datenkabel abnehmen. Damit kann bspw. einer Beschädigung des Datenkabels vorgebeugt werden. Im Allgemeinen kann die Trennebene bspw. auch über eine Sollbruchstelle definiert sein, über die der erste und zweite Leerrohrabschnitt (noch) einstückig miteinander verbunden sind. Die Sollbruchstelle kann bspw. als Bereich verringerter Wandstärke oder über eine vorab, also vor dem Einführen des Datenkabels eingebrachte Perforation definiert sein.

Gemäß einer bevorzugten Ausführungsform werden der erste und der zweite Leerrohrabschnitt von einem ersten und einem dazu mehrstückigen zweiten Leerrohrstück gebildet. Das erste und das zweite Leerrohrstück sind also bereits voneinander getrennt, wurden jedoch zu dem Leerrohrsystem zusammengesetzt. Bevorzugt sind sie aneinander befestigt, sind also die zusammengesetzten Enden in ihrer Relativposition festgelegt. Im Allgemeinen können die Leerrohrstücke dazu bspw. auch über einen Streifen Klebeband miteinander verbunden sein.

In bevorzugter Ausgestaltung sind die Leerrohrstücke über ein Kupplungsstück miteinander verbunden, also zusammengesteckt. Bevorzugt weist das Kupplungsstück beiderends eine Muffe auf, ist das jeweilige Ende des ersten und des zweiten Leerrohrstücks also jeweils in das Kupplungsstück eingeschoben. Bevorzugt kann das Kupplungsstück derart vorgesehen sein, dass die Innenwandflächen der zusammengesetzten Leerrohrstücke glatt ineinander übergehen, also ohne Sprung bzw. Stufe. Dazu können die Leerrohrstücke den gleichen Innendurchmesser haben und mit ihren Enden entweder direkt aneinandergrenzen oder jeweils an einen Zwischenabschnitt des Kupplungsstücks grenzen, der ebenfalls den gleichen Innendurchmesser hat.

Als Kupplungsstück kann bspw. auch ein arretierbares oder selbsttätig arretierendes Fitting vorgesehen sein. Das jeweilige Leerrohrstück kann in dem Fitting bspw. mit einer Überwurfmutter arretiert sein, die auf- bzw. festgeschraubt wird (Schraubfitting). Bevorzugt weist das Fitting einen Arretierungsring mit Sperrzähnen auf, die sich an dem Leerrohr verkrallen und eine Auszugsicherung schaffen; bevorzugt kann zusätzlich ein Löseelement vorgesehen sein, bspw. eine Hülse, die sich einschieben lässt und die Sperrzähne aus der Verkrallung hebt. Besonders bevorzugt ist dann gar kein zusätzliches Verschrauben notwendig (Steckfitting). Generell kann ein "Fitting" eine Anschlussstelle sein, an welcher das angesetzte Leerrohr auszugsicher gehalten ist (die zum Ausziehen notwendige Kraft kann bspw. mindestens das 2- oder 4-Fache der zum Ansetzen notwendigen Kraft sein, mit möglichen Obergrenzen bei z. B. höchstens dem 1000-, 500-, 100- bzw. 50-Fachen).

Generell können der erste und der zweite Leerrohrabschnitt bspw. jeweils eine Länge von mindestens 0,2 m, 0,4 m, 0,6 m 0,8 m, 1 m, 1,2 m bzw. 1,4 m haben, mit möglichen (davon unabhängigen) Obergrenzen bei z. B. höchstens 3 m, 2,5 m, 2 m bzw. 1,5 m). Für die Leerrohrabschnitte kann bspw. jeweils ein Well- oder Spiralrohr vorgesehen sein, was z. B. das temporäre Ablegen im Gehäuseinnenraum vereinfachen kann. Das Datenkabel ist in den Leerrohrabschnitten bevorzugt lose geführt, zwischen dem Kabelmantel und der Innenwandfläche des/der Leerrohrabschnitte bzw. Leerrohrstücke findet sich also ein ringraumförmiges Luftvolumen. Ein jeweiliger Leerrohrabschnitt bzw. jeweiliges Leerrohrstück kann bspw. einen Außendurchmesser von höchstens 30 mm, 25 mm, 20 mm bzw. 15 mm haben (eine mögliche Untergrenze kann bspw. bei mindestens 7 mm bzw. 10 mm liegen). Bei einer Wandstärke von 1-2 mm steht ein Innenquerschnitt zur Verfügung, in dem das Datenkabel gut geführt ist.

Gemäß einer bevorzugten Ausführungsform wird das Datenkabel im Zuge der Verlegung im Boden in das Leerrohrsystem eingebracht, vorzugsweise eingeblasen. In anderen Worten ist das Datenkabel also nicht mit dem Leerrohrsystem vorausgestattet. Bevorzugt wird auch außerhalb des Anschlussgehäuses, im Boden, zunächst ein Leerrohr verlegt, und wird das Datenkabel dann in einem Zug durch dieses und durch das gehäuseinnenseitige Leerrohrsystem verlegt, vorzugsweise durch Einblasen. Im Allgemeinen könnte das gehäuseaußenseitige Leerrohr auch direkt in den ersten Leerrohrabschnitt übergehen, könnte es sich also um dasselbe durchgehende Rohr handeln.

Bevorzugt sind das gehäuseaußenseitige Leerrohr und das Leerrohrsystem jedoch über ein Kupplungsstück zusammengesteckt, vorzugsweise ein Schraub- und/oder Steckfitting. Dieses Kupplungsstück ist bevorzugt an oder in einer Wand des Anschlussgehäuses lagefixiert, bevorzugt in einer den Gehäuseinnenraum horizontal begrenzenden Seitenwand. Generell ist bzw. wird das dem zweiten Leerrohrabschnitt entgegengesetzte Ende des ersten Leerrohrabschnitts an einer Boden- oder vorzugsweise Seitenwand des Anschlussgehäuses befestigt, besonders bevorzugt über das relativ zu dieser Wand lagefixierte Kupplungsstück bzw. Fitting.

Generell kann das (noch leere) Leerrohrsystem in dem Gehäuseinnenraum zeitweilig verwahrt werden und kann dieser mit einem Deckel verschlossen sein. Zum Einführen des Datenkabels kann dann der Deckel des Anschlussgehäuses entfernt und das Leerrohrsystem herausgenommen werden, wobei der erste Leerrohrabschnitt bevorzugt an der Gehäusewand befestigt ist, also entsprechend jedenfalls ein Abschnitt davon im Gehäuseinnenraum verbleibt. Bevorzugt ist das Anschlussgehäuse solchermaßen in den Boden eingebaut, dass der Deckel ohne Aufgraben entfernt werden kann; dieser kann bevorzugt im Wesentlichen bündig mit der Oberkante des Bodenaufbaus liegen.

In bevorzugter Ausgestaltung wird der in dem Leerrohrsystem verlegte Anschlussabschnitt des Datenkabels zeitweilig in dem Gehäuseinnenraum verwahrt und wird die Öffnung des Anschlussgehäuses mit einem Deckel verschlossen. Das Anschlussgehäuse und das Leerrohrsystem mit erstem und zweitem Leerrohrabschnitt können also für eine temporäre Lagerung genutzt werden, was logistische Vorteile ergeben kann, wie nachstehend am Beispiel eines Neubaugebiets geschildert. Werden in einem Neubaugebiet mehrere Wohngebäude erstellt, so werden diese zur Einrichtung einer Datenanbindung typischerweise an einem gemeinsamen Knotenpunkt zusammengefasst, z. B. einem Verteilerkasten (Spleißkasten) oder einer Spleißmuffe. Dies erfolgt nach dem Stand der Technik derart, dass zwischen dem Knotenpunkt und dem jeweiligen Wohngebäude ein jeweiliges Leerrohr im Boden verlegt wird, durch welches dann später das Datenkabel mit Druckluft eingeblasen werden kann (vom Knotenpunkt aus bis in das jeweilige Wohngebäude). Dazu muss am Knotenpunkt ein Techniker Spezialwerkzeug vorhalten (die Einblasvorrichtung) und muss ein anderer Techniker im jeweiligen Wohngebäude das Datenkabel "entgegennehmen" und ebenfalls Spezialwerkzeug vorhalten, nämlich ein Spleißgerät zum Anspleißen eines Steckers bzw. Steckerteils.

Die Erfinder haben festgestellt, dass selbst in einem Neubaugebiet, wo der Baubeginn oftmals zusammenfällt, der Baufortschritt auf den einzelnen Grundstücken divergieren kann. So befinden sich einige Wohngebäude dann bspw. noch im Rohbaustadium, während andere schon bezogen werden und dementsprechend die Datenanbindung erstellt werden muss. Im Ergebnis müssen die erwähnten Techniker mit ihrem Spezialwerkzeug wiederholt anrücken, was einen erheblichen Aufwand bedeuten kann. Im Vergleich dazu wird mit dem Anschlussgehäuse gemäß dem vorliegenden Gegenstand für die einzelnen Gebäude jeweils ein Zugangspunkt geschaffen, bspw. an der Grundstücksgrenze des jeweiligen Wohngebäudes (auf der Straße oder auch auf dem Grundstück selbst).

Von dem Knotenpunkt aus können die einzelnen Anschlussgehäuse dann in einem Arbeitsdurchgang angebunden werden, lässt sich also bspw. nacheinander in die einzelnen Anschlussgehäuse jeweils ein Datenkabel einblasen und dann dort mit einem Stecker bzw. Steckerteil ausstatten. Das Spezialwerkzeug (Einblasvorrichtung/Spleißgerät) und die Techniker müssen für einen im Vergleich kürzeren Zeitraum vorgehalten werden, und die eigentliche Anbindung des Gebäudes kann dann z. B. in einer nachstehend geschilderten Weise erfolgen.

Generell wird das dem ersten Leerrohrabschnitt entgegengesetzte Ende des zweiten Leerrohrabschnitts bevorzugt fluiddicht verschlossen, vorzugsweise mit einem angesetzten Verschlussstück. Hierbei kann es sich bspw. um einen eingesetzten Stopfen oder eine aufgesetzte Kappe handeln. Das Verschlussstück kann je nach Montagesituation das noch leere, nicht mit dem Datenkabel ausgestattet Leerrohrsystem verschließen und/oder in bevorzugter Ausgestaltung das Innenvolumen des Leerrohrsystems gegen das bereits hindurchgeführte Datenkabel dichten (bevor der zweite Leerrohrabschnitt abgenommen wird).

Generell kann das Kabelgehäuse auch aktiv sein, also z. B. an eine elektrische Stromversorgung angeschlossen werden. Ein aktives Kabelgehäuse kann z. B ein Konverter (Umsetzer) sein, mit dem das Glasfasersignal physikalisch in ein Signal eines anderen Mediums umgesetzt wird, bspw. ein drahtgebundenes Kabelsignal, insbesondere ein Kupferkabel- bzw. Ethernet-Signal. Das Kabelgehäuse kann i. A. bspw. auch ein WLAN-Modul sein, sodass direkt das Anschlussgehäuse selbst als WLAN-Zugangspunkt genutzt werden kann.

Andererseits kann aber auch ein passives Kabelgehäuse bevorzugt sein, an bzw. in dem verbunden bzw. gesteckt wird, das aber keine eigene Stromversorgung hat. Es kann dann bspw. derselbe Signaltyp in das Kabelgehäuse hinein und aus diesem heraus gelangen und im Kabelgehäuse z. B. nur eine Verzweigung/Verbindung erfolgen.

Ein Glasfaserkabel kann bspw. einen Kabelmantel aufweisen, in dem die eigentliche Glasfaser verläuft, z. B gemeinsam mit einer Verstärkungsfaser, etwa einer Aramidfaser. Am Kabelgehäuse kann eine Auszugssicherung für das Glasfaserkabel geschaffen sein, kann also bspw. der Kabelmantel geöffnet und die Verstärkungsfaser herausgenommen und relativ zum Kabelgehäuse festgelegt sein, bspw. gewickelt oder geklemmt. Alternativ oder zusätzlich kann das Kabelgehäuse bspw. auch ein Ablagemittel aufweisen, z. B in seinem Innenraum Vorsprünge bzw. Stege aufweisen, an denen sich das Daten- bzw. Glasfaserkabel definiert schleifenförmig ablegen lässt. Alternativ oder zusätzlich kann das Kabelgehäuse auch eine Spleißablage aufweisen, also bspw. eine Lamellenstruktur, in welcher der Kabelspleiß abgelegt wird. Das Kabelgehäuse kann bevorzugt ein Steckergehäuse sein, weiter bevorzugt wird in seinem Inneren eine Spleißverbindung geschaffen, die das von der Datenkabel-Verzweigungsstelle kommende Datenkabel mit dem Stecker verbindet. Dazu kann der Stecker bevorzugt mit einem Datenkabel- bzw. Glasfaserkabelstück vorkonfektioniert sein, auch als Pigtail bezeichnet, das im Inneren des Kabelgehäuses angeordnet ist. Zum Herstellen der eben diskutierten Verbindung wird das Kabelgehäuse geöffnet und dieses Datenkabelstück mit dem von der Datenkabel-Verzweigungsstelle kommenden Datenkabel verbunden.

Gemäß einer bevorzugten Ausführungsform wird das Datenkabel an oder in dem Kabelgehäuse mit einem weiteren Datenkabel verbunden, das an seinem entgegengesetzten Ende mit einem Stecker ausgestattet ist. Diese und die zugehörigen, nachstehend geschilderten Varianten werden dabei auch unabhängig von dem hauptanspruchsgemäßen Leerrohrsystem als Erfindung betrachtet und sollen entsprechend offenbart sein. Konkret werden die hauptanspruchsgemäßen Ziffern i), insbesondere Ziffer i) in Verbindung mit dem Einbau in den Boden solchermaßen, dass der Gehäuseinnenraum zugänglich bleibt, und ii) also auch unabhängig von den Ziffern iii) und iv), dabei aber in Verbindung mit einer oder mehreren der nachstehend beschriebenen Varianten "weiteres Datenkabel mit Stecker" als Erfindung gesehen.

Gemäß einer bevorzugten Ausführungsform wird das weitere Datenkabel durch eine den Gehäuseinnenraum begrenzende Wand des Anschlussgehäuses verlegt (wobei es bereits mit dem Stecker ausgestattet ist), vorzugsweise eine Seitenwand. Es ist dann also ein Anschlussabschnitt des weiteren Datenkabels in dem Gehäuseinnenraum angeordnet und ein Anbindungsabschnitt außerhalb davon. Das weitere Datenkabel wird dabei nicht nach oben durch die Öffnung aus dem Gehäuseinnenraum heraus verlegt, sondern unterhalb einer Oberkante des Bodenaufbaus, also im Erdreich. Bevorzugt ist das weitere Datenkabel nicht nur an dem Anbindungsabschnitt endseitig mit einem Stecker vorkonfektioniert, sondern ist auch das entgegengesetzte Ende mit einem Stecker vorkonfektioniert (bereits beim Verlegen des weiteren Datenkabels durch die Anschlussgehäusewand). Dieser wird dann in oder an dem Kabelgehäuse mit dem Datenkabel zusammengesteckt, es wird also eine funktional zur Datenübertragung geeignete Verbindung hergestellt, siehe vorne.

Gemäß einer bevorzugten Ausführungsform wird zumindest ein Abschnitt des Anbindungsabschnitts in einem Hohlkörper aufbewahrt, der vertikal höher als das Anschlussgehäuse platziert ist oder wird. Der Hohlkörper ist bevorzugt außerhalb des Bodenaufbaus angeordnet, besonders bevorzugt vollständig. Bevorzugt sitzt der Hohlkörper auf dem Anschlussgehäuse auf. Der Hohlkörper ist vorzugsweise an dem Anschlussgehäuse befestigt, bevorzugt an einer oberseitigen Flanschplatte des Anschlussgehäuses (die im Wesentlichen bündig mit einer Oberkante des Bodenaufbaus liegt). Der Hohlkörper kann mit dem Anschlussgehäuse verschraubt und/oder verrastet werden, er kann bspw. die erwähnte Flanschplatte vertikal formschlüssig umgreifen.

Der Anbindungsabschnitt des weiteren Datenkabels kann in dem Hohlkörper einerseits sicher und andererseits gut zugänglich verwahrt werden. Für eine Endmontage, wenn also der Anbindungsabschnitt in Richtung Datennutzer- oder Datenverteilerstelle verlegt wird, also zu dem anzuschließenden Gebäude, wird der Anbindungsabschnitt herausgenommen. Er kann dann vorzugsweise im Erdreich verlegt werden. Der Hohlkörper kann bei der Endmontage entfernt werden, sodass nur noch die mit der Oberkante des Bodenaufbaus bündige Oberkante des Anschlussgehäuses sichtbar ist, die in der Regel mit einem Deckel verschlossen ist oder wird.

Gemäß einer bevorzugten Ausführungsform wird auf dem Anschlussgehäuse, also oberhalb einer Oberkante des Bodenaufbaus, ein Verkehrsleitkegel angeordnet. Dieser kann bspw. eine Signalfarbgebung haben, also z. B. gelb oder orange sein. Er kann auch in besonderer Weise Licht reflektierend gestaltet sein, z. B. mit aufgebrachten, insbesondere aufgeklebten Reflexionsflächen bzw. -streifen. Der Leitkegel, der bevorzugt an dem Anschlussgehäuse befestigt wird, etwa verschraubt und/oder verrastet, kann bspw. in einem Neubaugebiet eine Warn- bzw. Hinweisfunktion haben, z. B. den Führern von Baufahrzeugen anzeigen, dass an der entsprechenden Stelle im Boden ein Anschlussgehäuse platziert ist. Der Leitkegel verbleibt dann bevorzugt nicht dauerhaft auf dem Anschlussgehäuse, er kann bspw. nach der Herstellung des Boden- bzw. Straßenaufbaus abgenommen werden. Vorzugsweise wird der Leitkegel zugleich als eben geschilderter Hohlkörper genutzt.

Alternativ zu dem Vorsehen des weiteren Datenkabels mit dem Anbindungsabschnitt und dem Verlegen desselben kann der Stecker des weiteren Datenkabels gemäß einer bevorzugten Ausführungsform an dem Anschlussgehäuse lagefixiert sein, also bspw. in einer definierten Relativposition an der Anschlussgehäusewand befestigt. Das weitere Datenkabel ist dann bevorzugt vollständig in dem Gehäuseinnenraum angeordnet und erstreckt sich von dem Kabelgehäuse zu dem Stecker. Bevorzugt ist der Stecker dabei unterhalb der Oberkante des Bodenaufbaus angeordnet. Ein drittes Datenkabel kann dann im Boden verlegt und direkt an das Anschlussgehäuse angesteckt werden. Vorzugsweise verläuft das dritte Datenkabel dann bis zu der Datennutzer- oder Verteilerstelle, insbesondere in das Gebäude hinein. In anderen Worten ist also ein Ende des dritten Datenkabels an den Stecker am Anschlussgehäuse gesteckt und ist das entgegengesetzte Ende dann im fertig verlegten Zustand innerhalb des Gebäudes angeordnet.

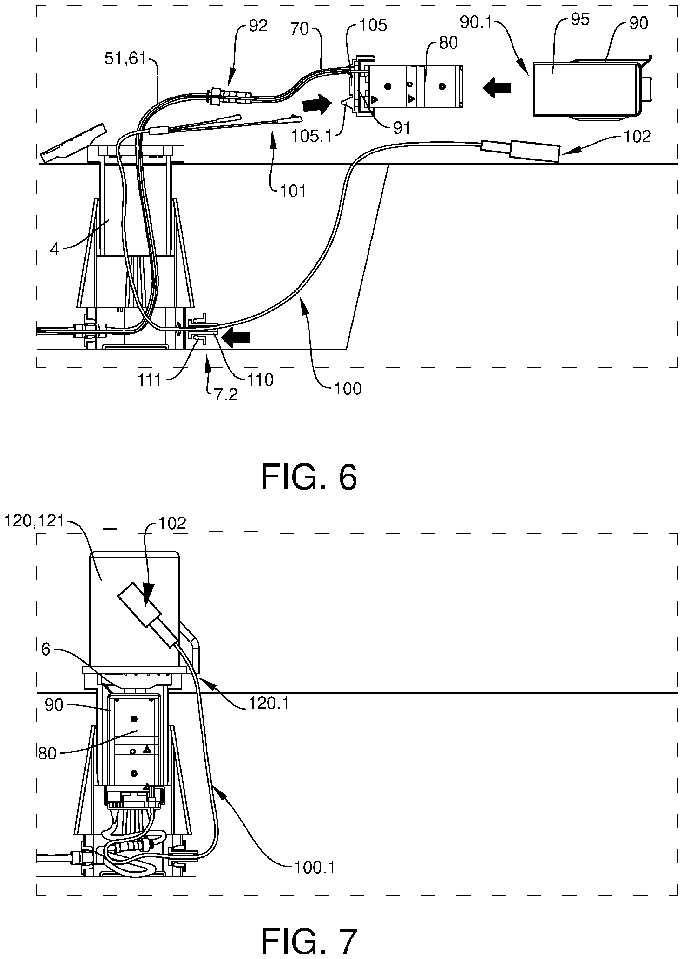

Der Stecker ist bevorzugt an einer Wand des Anschlussgehäuses befestigt, besonders bevorzugt einer Seitenwand (die den Gehäuseinnenraum horizontal begrenzt). Vorzugsweise ist er an oder in einem Loch in der Gehäusewand befestigt, z. B. in das Loch eingesetzt und mit einem Adapter oder einer Tülle befestigt. Insofern wird zur Illustration auf die Ausgestaltung der Anschlussstelle 7.2 in Figur 6 verwiesen. Der Stecker kann bspw. in den Elastomerstopfen eingesetzt sein, dieser kann direkt in der Öffnung platziert oder seinerseits über den Adapter eingesetzt und gehalten sein. In allgemeinen Worten kann der Stecker über ein Einsatzstück in einer Öffnung in der Gehäusewand befestigt sein, wobei das Einsatzstück den Stecker aufnimmt und für sich ein- oder mehrteilig aufgebaut sein kann.

Auch unabhängig von der Befestigung im Einzelnen kann der Stecker nach außen, also zum Boden hin, bspw. von einer Dose eingefasst sein. Dies kann einen Schutz bieten, des Steckers für sich vor dem Anstecken des dritten Datenkabels und/oder nach dem Anstecken des dritten Datenkabels die hergestellte Steckverbindung schützen. Bevorzugt kann eine Dose sein, welche den Stecker und/oder die Steckverbindung in einem abgedichteten Volumen hält. Dazu kann das dritte Datenkabel bspw. durch eine Elastomertülle verlegt werden, die den Übergang zwischen Innenraum und bodenseitigem Außenraum der Dose markiert.

Bevorzugt kann die Dose bspw. mit einem abnehmbaren Deckel ausgestattet sein, der ihren Innenraum abdeckt, vorzugsweise dichtend verschließt. Damit ist der Stecker für sich geschützt. Zum Anstecken des dritten Datenkabels kann der Deckel geöffnet werden, er kann bspw. abgenommen und durch einen Deckel mit einer Durchführung, z. B. einer Tülle, für das dritte Datenkabel ersetzt werden. Ein solcher Austauschdeckel kann bspw. auch vorab am dritten Datenkabel platziert sein, dieses kann also mit dem Austauschdeckel vorkonfektioniert sein (in der Herstellung kann z. B. das dritte Datenkabel durch den Austauschdeckel gefädelt und kann es erst danach mit dem Stecker ausgestattet werden). Alternativ kann bspw. auch der zuvor den Stecker für sich schützende Deckel mit einer Durchdringung, vorzugsweise einer Elastomertülle, ausgestattet sein, die aber noch endseitig verschlossen ist. Zum Einführen des dritten Datenkabels kann die Durchdringung geöffnet, bspw. ein Stopfen ausgestoßen oder eine Membran aufgerissen werden.

Die in den letzten Absätzen geschilderte Variante "lagefixierter Stecker am Anschlussgehäuse, an den von außen ein drittes Datenkabel angesteckt wird" soll auch unabhängig davon offenbart sein, ob vom Gehäuseinnenraum des Anschlussgehäuses her (wie vorstehend geschildert) das weitere Datenkabel oder ein anderes Datenkabel mit dem Stecker verbunden ist oder wird. Es kann bspw. auch das vom übergeordneten Knotenpunkt (z. B. Verteilerkasten oder Spleißmuffe) in das Anschlussgehäuse hineinverlegte Datenkabel direkt vom Gehäuseinnenraum her an den Stecker angeschlossen werden, es kann also bspw. nach dem Einblasen ein Verbindungsstecker an das Datenkabel angespleißt und kann dieser dann von innen an den lagefixierten Stecker angesteckt werden. Bevorzugt wird bzw. ist das Kabelgehäuse in einen Dichtbehälter eingesetzt, besonders bevorzugt einen topfförmigen Dichtbehälter. Dieser hat also einen Boden und entgegengesetzt eine offene Seite (diese wird in das Kabelgehäuse eingesetzt) und wird bevorzugt mit dem Boden nach oben im Anschlussgehäuse platziert (im ortsfesten Koordinatensystem betrachtet). Der topfförmige Dichtbehälter ist also nach oben hin abgeschlossen, sodass das Kabelgehäuse in einem Luftvolumen gehalten ist, also auch bei ansteigendem Wasser trocken bleibt. Die Verwendung eines Dichtbehälters kann Flexibilität dahingehend schaffen, dass anwendungsabhängig unterschiedliche Kabelgehäuse eingesetzt werden können, die zudem für sich keine wasserdichten Spezialausführungen sein müssen (es können einfache Innenraumgehäuse verwendet werden).

Gemäß einer bevorzugten Ausführungsform wird bzw. ist ein Elastomermantel vorgesehen, der die offene Seite des Dichtbehälters bedeckt. Der Elastomermantel kann einen oder mehrere Durchtritte für das/die Datenkabel haben. Ein solcher Durchtritt kann z. B tüllenförmig ausgebildet sein, sich also als Rohrabschnitt erstrecken, vorzugsweise von dem Dichtbehälter weg. Wird das jeweilige Datenkabel hindurch verlegt, legt sich diese Tülle dichtend an. Sie kann bspw. auch zunächst mit einem Blindverschluss verschlossen sein, der dann geöffnet wird, bspw. mit dem Leerrohr oder Datenkabel ausgestoßen wird. Zum Hindurchführen des Steckers des weiteren Datenkabels, der an oder in dem Steckergehäuse mit dem Datenkabel zusammengesteckt wird, kann die entsprechende Tülle bspw. bspw. mit einem Spreizwerkzeug geweitet werden. Ebenso kann in der Tülle ein die Tülle weitender Einsatz angeordnet sein, bspw. eine Hülse, wobei der Einsatz nach dem Hindurchführen des Steckers herausgenommen wird, sodass sich die Tülle dichtend anlegt, vorzugsweise direkt an den Kabelmantel.

Der Elastomermantel kann einen umlaufenden Rand bzw. Kragen haben, also bspw. sackförmig sein, wobei am Sackboden die Tülle(n) angeordnet ist/sind. Der umlaufende Rand bzw. Kragen wird an dem Dichtbehälter befestigt. Dazu kann am offenen Ende des Dichtbehälters bspw. ein Flansch vorgesehen sein, auf welchen der Elastomermantel aufgezogen wird. Ebenso kann der Elastomermantel von dem Ansetzteil kraft- und/oder formschlüssig angedrückt werden, bevorzugt an einen Flansch des Dichtbehälters. Vorteilhaft kann eine Kombination des Elastomermantels mit einem verrastenden Ansetzteil sein. Das Ansetzteil kann den Dichtbehälter bspw. umgreifen und den Elastomermantel in einer dichten Anlage an der Außenfläche des Dichtbehälters befestigen. Ebenso kann das Ansetzteil den Elastomermantel aber bspw. auch gegen die Innenwandfläche des Dichtbehälters dichten.

Generell kann ein "Elastomermaterial", aus dem bspw. der Elastomermantel vorgesehen ist, im Rahmen dieser Offenbarung ganz allgemein ein Kunststoff mit elastischem Verhalten sein. Dessen Shore-Härte (Shore A) kann bspw. bei höchstens 90 Shore, 80 Shore, 75 Shore bzw. 70 Shore und (davon unabhängig) bspw. bei mindestens 20 Shore, 25 Shore, 30 Shore, 35 Shore bzw. 40 Shore liegen. Es kann sich bspw. um ein Kautschukmaterial handeln, vorzugsweise um einen Synthesekautschuk, etwa EPDM (Ethylen-Propylen-Dien, M-Gruppe). Ebenso kann es sich aber bspw. auch um einen Thermoplastischen Elastomer (TPE) oder ein Silikon-basiertes Material handeln, etwa Silikonkautschuk bzw. Silikonelastomer.

Die Erfindung betrifft auch ein Verfahren, bei welchem mit einem Anschlussgehäuse eine Datenkabelanbindung bereitgestellt wird.

Ferner betrifft die Erfindung eine Kabelanbindungseinheit, die ein Anschlussgehäuse, ein Leerrohrsystem und ein Datenkabel aufweist. Des Anschlussgehäuse ist in den Boden eingebaut, vorzugsweise so, dass der Gehäuseinnenraum von oben zugänglich ist, und das Datenkabel mündet in den Gehäuseinnenraum. Das Leerrohrsystem weist einen ersten und einen zweiten Leerrohrabschnitt auf, zwischen denen eine Trennebene definiert ist. Es wird ausdrücklich auf die vorstehenden Ausführungen verwiesen.

Im Folgenden wird die Erfindung anhand eines Ausführungsbeispiels näher erläutert, wobei die einzelnen Merkmale im Rahmen der nebengeordneten Ansprüche auch in anderer Kombination erfindungswesentlich sein können und auch weiterhin nicht im Einzelnen zwischen den unterschiedlichen Anspruchskategorien unterschieden wird.

### Im Einzelnen zeigt

- Figur 1: ein Anschlussgehäuse, das aus einem Ober- und einem Unterteil zusammengesetzt ist, in schematischer Darstellung;
- Figur 2: verschiedene Möglichkeiten zur Positionierung von Anschlussgehäusen bei einer Erschließung von Gebäuden im Bestand;
- Figur 3: analog Figur 2 eine Möglichkeit zur Positionierung von Anschlussgehäusen im Falle eines Neubaugebiets;
- Figur 4: ein geöffnetes Anschlussgehäuse mit angeschlossenem Leerrohrsystem und eingeblasenem Datenkabel;
- Figur 5: die Anordnung gemäß Figur 4 mit dem Leerrohrsystem und von dem Datenkabel abgenommenen zweiten Leerrohrabschnitt;
- Figur 6: die Anordnung gemäß Figur 5 mit einem Kabelgehäuse, an welches das Datenkabel angeschlossen ist, sowie ein weiteres Datenkabel;
- Figur 7: auf die Situation gemäß Figur 6 folgend einen auf das Anschlussgehäuse gesetzten Hohlkörper, in dem das dem Kabelgehäuse entgegengesetzte Ende des weiteren Datenkabels verwahrt wird;
- Figur 8: eine alternative Ausführungsform mit einem an dem Anschlussgehäuse befestigten Stecker.

### Bevorzugte Ausführung der Erfindung

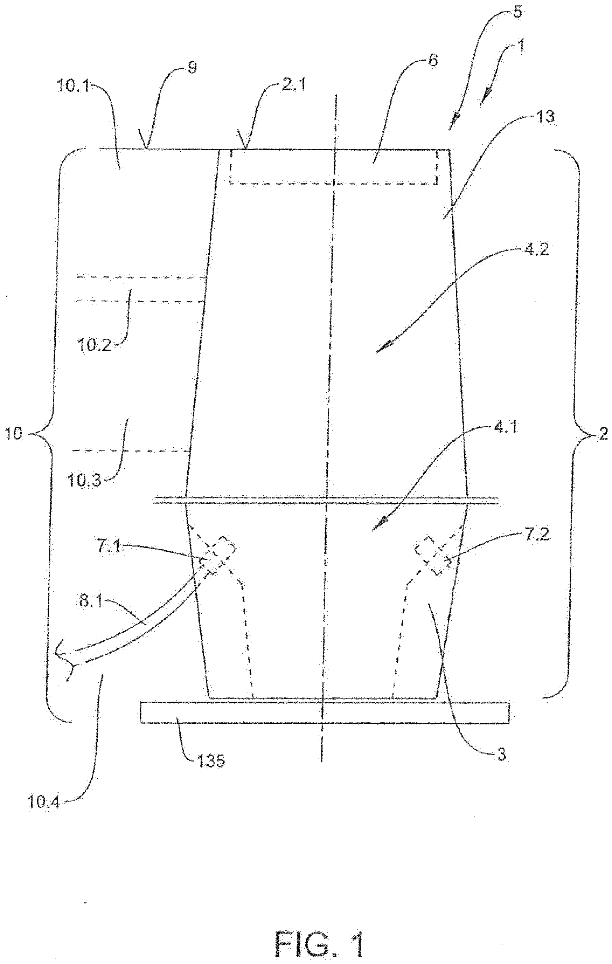

Figur 1 zeigt einen Aufbau 1 mit einem Anschlussgehäuse 2, das aus einem Unterteil 3 und einem Oberteil 13 zusammengesetzt ist. Bei dem Oberteil 13 handelt es sich um eine Straßenkappe. Das Anschlussgehäuse 2 begrenzt einen Innenraum 4, welcher sich der Gliederung in Unter- und Oberteil 3, 13 entsprechend in einen unteren Abschnitt 4.1 und einen oberen Abschnitt 4.2 gliedert. Oberseitig weist das Anschlussgehäuse 2 eine Öffnung 5 auf, über welche der Innenraum 4 zugänglich ist, und die vorliegend mit einem Deckel 6 verschlossen ist.

Das Anschlussgehäuse 2 ist mit Anschlussstellen 7.1, 7.2 ausgestattet. An die Anschlussstelle 7.1 ist ein Leerrohr 8.1 angesetzt, das sich von einem Leerrohrstrang zu dem Anschlussgehäuse 2 erstreckt. Über die Anschlussstelle 7.2 wird das Anschlussgehäuse 2 mit dem Verteiler/Nutzer, bspw. einem Gebäude verbunden.

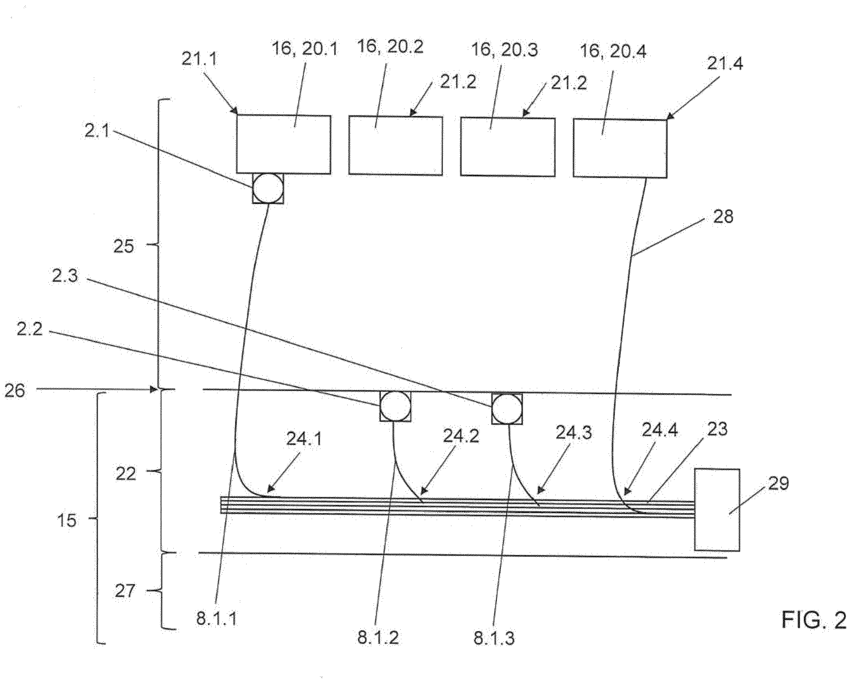

Das Anschlussgehäuse 2 wird außerhalb des Gebäudes im Boden z. B. im Schichtaufbau 10 der Straße 15 platziert (siehe auch Figur 2), sodass eine Oberkante 2.1 des Anschlussgehäuses 2 bündig mit einer Oberkante 9 des Schichtaufbaus 10 liegt, der in der linken Bildhälfte skizziert ist. Eine obere Schicht 10.1 kann bspw. die Pflasterschicht (Gehweg) oder Asphaltdeckschicht (Straße) sein, die Schicht 10.2 darunter kann entsprechend ein Bett oder eine Binderschicht sein. Die darunterliegenden Schichten 10.3, 10.4 stellen Tragschichten dar. Wird das Anschlussgehäuse 2 positioniert, ist die Lage der Oberkante 9 bereits bekannt (festgelegt), auch wenn der Schichtaufbau 10 mitunter erst deutlich später erstellt wird.

Figur 2 illustriert verschiedene Möglichkeiten bei einer Anwendung im Bestand. In der hier dargestellten Situation wird ein Straßenzug durch Glasfaserverlegung erschlossen. Schematisch sind als Datennutzerstellen 16 vier Gebäude 20.1-20.4 dargestellt, die jeweils auf einer Gebäudegrundfläche 21.1-21.4 stehen. Für die Erschließung wird der Gehweg 22 aufgebrochen und wird ein Graben ausgehoben, dieser ist in der schematischen Aufsicht nicht im Einzelnen dargestellt. In dem Graben wird ein Leerrohrstrang 23 verlegt, für jedes Gebäude 20.1-20.4 gibt es eine jeweilige Datenkabel-Verzweigungsstelle 24.1-24.4. Zur Illustration und Orientierung: in der Darstellung oberhalb des Gehwegs 22 erstrecken sich die jeweiligen Grundstücke 25, dazwischen liegt jeweils die Grundstücksgrenze 26. In der Darstellung unterhalb des Gehwegs 22 verläuft die Fahrbahn 27, die wie der Gehweg 22 Teil der Straße 15 ist.

Im Zuge der Erschließung dieses Straßenzugs hat sich hier exemplarisch nur ein Eigentümer für einen sofortigen Anschluss entschlossen, dies ist das Gebäude 20.4. In diesem Fall kann von der Datenkabel-Verzweigungsstelle 24.4 zu dem Gebäude 20.4 ein Leerrohr 28 auch direkt verlegt werden. Durch dieses wird dann das Datenkabel verlegt.

Für die Gebäude 20.1-20.3, für die (vorerst) kein Anschluss gewünscht ist, wird jeweils ein Anschlussgehäuse 2.1-2.3 platziert. Ferner wird, weil ja der Graben momentan ausgehoben ist, ein jeweiliges Leerrohr 8.1.1-8.1.3 zwischen der jeweiligen Datenkabel-Verzweigungsstelle 24.1-24.3 und dem jeweiligen Anschlussgehäuse 2.1-2.3 verlegt, vgl. auch die Zusammenschau mit Figur 1 zur Illustration. Der Graben kann dann aufgeschüttet, und es kann der Schichtaufbau 10 wiederhergestellt werden.

Soll dann später zu einem der Gebäude 20.1-20.3 doch ein Datenkabel verlegt werden, muss jedenfalls der Gehweg 22 nicht mehr aufgegraben werden. Durch das entsprechende Leerrohr 8.1.1-8.1.3 kann über die jeweilige Datenkabel-Verzweigungsstelle 24.1-24.3 von einem Knotenpunkt 29 aus ein Datenkabel eingeblasen werden, es kann der Deckel 6 des Anschlussgehäuses 2 geöffnet und das Datenkabel dort entgegengenommen werden. Die Verbindung zum jeweiligen Gebäude erfolgt dann mit einem vorkonfektionierten Datenkabel, siehe unten im Detail. Bei dem Gebäude 20.1 sitzt das Anschlussgehäuse 2.1 direkt an der Gebäudegrundfläche 21.1, und zwar nicht im Bereich der Straße, sondern auf dem Grundstück 25. Bei der Platzierung direkt am Gebäude muss gar nicht mehr aufgegraben, sondern nur durch die Gebäudeaußenwand gebohrt werden. Bei den Gebäuden 20.2, 20.3 muss zur Erdverlegung zwar ein Stück auf dem Grundstück 25 ausgehoben werden, der Aufwand hierfür ist jedoch deutlich geringer als für das Aufgraben des Gehwegs 22.

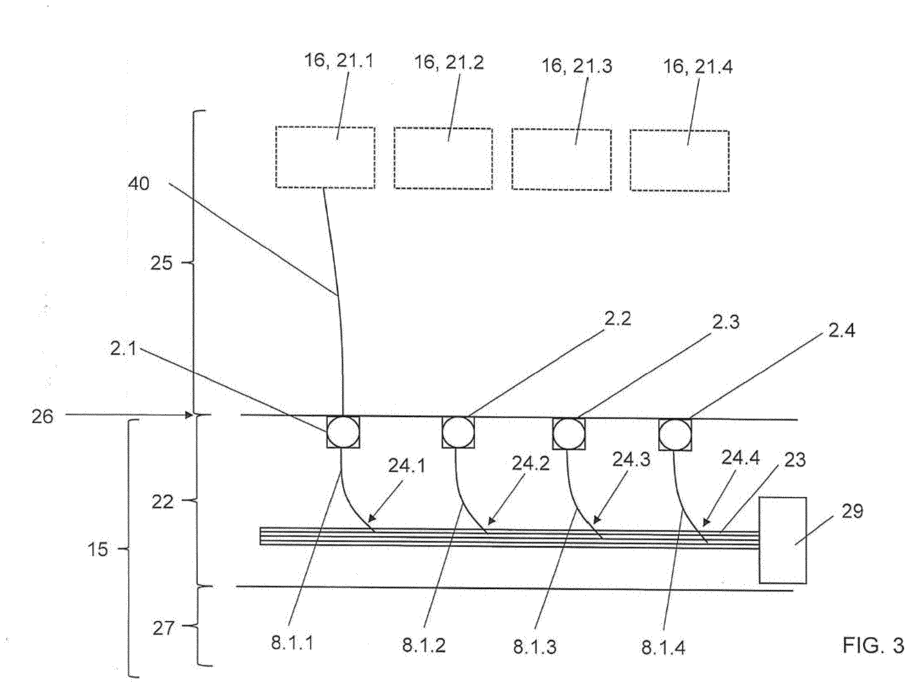

Figur 3 illustriert eine Anwendung in einem Neubaugebiet. Zur Orientierung sind wiederum der Gehweg 22 und die Fahrbahn 27 der Straße 15 eingezeichnet, wobei diese bei der Verlegung des Leerrohrstranges 23 noch gar nicht hergestellt sind. In diesem Fall sind auch noch keine Gebäude erstellt (jedenfalls noch nicht vollständig), weswegen nur die Gebäudegrundflächen 21.1-21.4 eingezeichnet sind.

Bei der Verlegung des Leerrohrstranges 23 wird an jeder Datenkabel-Verzweigungsstelle 24.1-24.4 ein jeweiliges Leerrohr 8.1.1-8.1.4 zu einem jeweiligen Anschlussgehäuse 2.1-2.4 verlegt. Die Anschlussgehäuse 2.1-2.4 werden in diesem Fall an den Grundstücksgrenzen 26, aber noch auf dem Gehweg 22 platziert. Sie könnten aber auch auf den Grundstücken 25 platziert werden.

Wird dann das erste Gebäude fertiggestellt, bspw. auf der Gebäudegrundfläche 21.1, kann in das entsprechende Anschlussgehäuse 2.1 von dem Knotenpunkt 29 her ein Knotenpunkt-Datenkabel eingeblasen werden. Da hierfür Spezialwerkzeug bereitgestellt werden muss (Einblasvorrichtung und Spleißgerät), wird dann im selben Zuge auch gleich in die anderen Anschlussgehäuse 2.2-2.4 jeweils ein Knotenpunkt-Datenkabel verlegt. Die Anbindung zwischen Gebäude 20 und Anschlussgehäuse 2, vorliegend also dem Anschlussgehäuse 2.1, wird mit einem weiteren Datenkabel 40 hergestellt. In gleicher Weise kann dann auch bei den anderen Gebäuden verfahren werden, wenn diese sukzessive fertiggestellt sind und angebunden werden können.

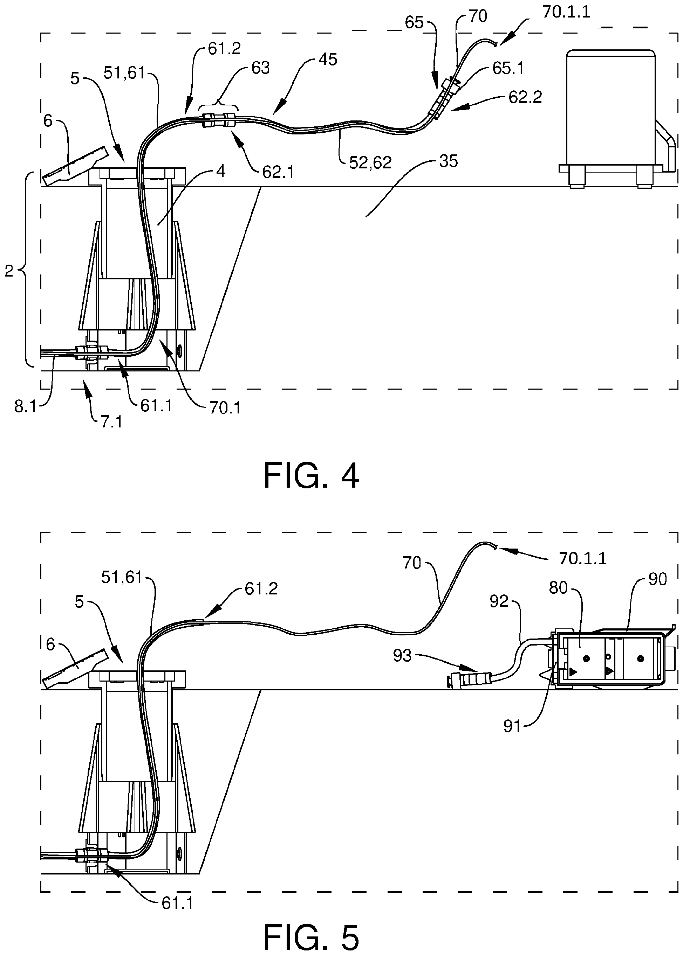

Figur 4 zeigt ein in den Boden 35, z. B. den Straßenaufbau (siehe vorne) oder in das Erdreich auf einem Grundstück, eingebautes Anschlussgehäuse 2. An die Anschlussstelle 7.1 ist von außen das Leerrohr 8.1 angeschlossen, gehäuseinnenseitig ist ein Leerrohrsystem 45 angesetzt. Dieses weist einen ersten Leerrohrabschnitt 51 und einen zweiten Leerrohrabschnitt 52 auf. Die Leerrohrabschnitte 51, 52 werden vorliegend jeweils von einem gesonderten Leerrohrstück 61, 62 gebildet, wobei das erste und das zweite Leerrohrstück 61, 62 über ein Kupplungsstück 63 zusammengesteckt sind.

Das Kupplungsstück 63 ist vorliegend als Doppelmuffe ausgeführt, in diese ist ein erstes Ende 62.1 des zweiten Leerrohrstücks 62 und ein zweites Ende 61.2 des ersten Leerrohrstücks 61 von der entgegengesetzten Seite her eingeschoben. Mit seinem entgegengesetzten, ersten Ende 61.1 ist das erste Leerrohrstück 61 an die Anschlussstelle 7.1 gesetzt, vorliegend also in das Fitting eingeschoben (von einer dem Leerrohr 8.1 entgegengesetzten Seite her). An dem entgegengesetzten Ende des Leerrohrsystems 45, also am zweiten Ende 62.2 des zweiten Leerrohrstücks 62 ist eine Verschlusskappe 65 aufgesetzt, mit der das Innenvolumen des Leerrohrsystems 45 dicht verschlossen ist bzw. werden kann.

In der Situation gemäß Figur 4 wurde bereits ein Datenkabel 70 durch das Leerrohr 8.1 und das Leerrohrsystem 45 verlegt. Ein Anschlussabschnitt 70.1 des Datenkabels 70 mündet in den Gehäuseinnenraum 4, er erstreckt sich von der Anschlussstelle 7.1 weg bis zu einem Ende 70.1.1 des Datenkabels 70. Der Anschlussabschnitt 70.1 ist größtenteils in dem Leerrohrsystem 45 geführt, nur ein endseitiger Abschnitt steht aus der Kappe 65 hervor. Diese ist mit einem verspannbaren Elastomerelement ausgestattet, das mittels einer Überwurfmutter 65.1 in einen Dichtsitz gebracht werden kann, also das Datenkabel 70 gegen das Innenvolumen des Leerrohrsystems 45 abdichtet.

Bereits vor dem Einblasen des Datenkabels 70, also vor der in Figur 4 illustrierten Situation, ist bzw. wird das Leerrohrsystem 45 an die Anschlussstelle 7.1 gesetzt. Das Leerrohrsystem 45 kann dann in dem Gehäuseinnenraum 4 abgelegt werden, und dieser kann mit dem Deckel 6 verschlossen werden. Die Kappe 65 kann auch in dieser Situation das Leerrohrsystem 45 endseitig dichtend verschließen, was bspw. einer Einleitung von Schleichgas in den Gehäuseinnenraum 4 vorbeugen kann. Zum Verlegen des Datenkabels 70 wird dann der Deckel 6 entfernt und wird das Leerrohrsystem 45 durch die Öffnung 5 herausgenommen. Dann wird die Kappe 65 entweder vorübergehend abgenommen oder jedenfalls das verspannte Elastomerelement durch Lösen der Überwurfmutter 65.1 entspannt. Das Datenkabel 70 wird bevorzugt von dem Knotenpunkt 29 (vergleiche Figuren 2 und 3) aus verlegt, also z. B. von einem Verteilerkasten oder einer Spleißmuffe her.

Anschließend kann das Leerrohrsystem 45 mit dem Datenkabel 70 wieder in dem Gehäuseinnenraum 4 verwahrt werden, wird es also schleifenförmig abgelegt und die Öffnung 5 mit dem Deckel 6 verschlossen. Figur 5 illustriert einen weiteren Erschließungsabschnitt, wenn nämlich das Datenkabel 70 an ein Kabelgehäuse 80 angeschlossen wird. Dazu wird der zweite Leerrohrabschnitt 52, also das zweite Leerrohrstück 62 abgenommen, sodass ein hinreichend langer Abschnitt des Datenkabels 70 an dem Ende 70.1.1 freigelegt ist, um gut hantieren zu können. Da zwischen den Leerrohrabschnitten 51, 52, also über das Kupplungsstück 63 zwischen den Leerrohrstücken 61, 62, bereits vorab eine Trennebene definiert ist, kann der zweite Leerrohrabschnitt 52 ohne die Gefahr einer Beschädigung des Datenkabels 70 abgenommen werden.

Das Datenkabel 70 wird dann in dem Kabelgehäuse 80 mit einem (nicht dargestellten) Stecker verbunden. Bei dem Datenkabel 70 handelt es sich um ein Glasfaserkabel, und dieses wird an ein bereits am Stecker angeordnetes Glasfaserstück (ebenfalls nicht dargestellt) angespleißt. Eine Überlänge des Datenkabels 70 kann dann schleifenförmig in dem Kabelgehäuse abgelegt werden.

Wie aus Figur 5 ferner ersichtlich, ist das Kabelgehäuse 80 in einem Dichtbehälter 90 angeordnet, vergleiche auch Figur 6 im Detail. Im Einzelnen trägt ein Ansetzteil 91 das Kabelgehäuse 80 und ist bzw. wird dieses Ansetzteil 91 an die offene Seite 90.1 des Dichtbehälters 90 gesetzt, vergleiche Figur 6 zur Illustration. An dem Ansetzteil 91 ist ein Leerrohrstutzen 92 montiert, durch diesen und durch ein endseitig aufgesetztes Fitting 93 wird das Datenkabel 70 vor dem beschriebenen Verbinden mit dem Stecker gefädelt. Anschließend kann, wie in Figur 6 illustriert, das zweite Ende 61.1 des ersten Leerrohrstücks 61 in ein Fitting 93 eingeschoben werden, das endseitig auf dem Rohrstutzen 92 angeordnet ist.

Figur 6 illustriert nochmals das Ansetzteil 91 mit dem in diesem Fall schon an das Datenkabel 70 angeschlossenen Kabelgehäuse 80, sowie den Dichtbehälter 90 im abgenommenen Zustand. Der Dichtbehälter 90 ist zu der Seite 90.1 hin offen (und in der entgegengesetzten Richtung geschlossen). Das Kabelgehäuse 80 wird für die beschriebenen Kabelarbeiten herausgenommen und dann wieder eingesetzt, es ist dann im Innenraum 95 des Dichtbehälters 90 in einem Luftvolumen gehalten.

Vor dem Einsetzen des Kabelgehäuses 80 in den Dichtbehälter 90 wird noch ein weiteres Datenkabel 100 angeschlossen, das beiderends mit Steckern 101, 102 vorkonfektioniert ist. Die Stecker 101 werden durch eine von einem Elastomermantel 105 gebildete Tülle 105.1 verlegt, wozu die Tülle 105.1 bspw. temporär mit einem Spreizwerkzeug geweitet wird (nicht dargestellt). An bzw. in dem Kabelgehäuse 80 werden die Stecker 101 dann mit dem Stecker des Datenkabels 70 zusammengesteckt, wird also eine funktional zur Datenübertragung geeignete Verbindung geschaffen. Wie in der Beschreibungseinleitung erläutert, kann in dem Kabelgehäuse 80 eine Konversion erfolgen, kann also das weitere Datenkabel 100 bspw. metallisch leitend, etwa als Kupferkabel ausgeführt sein. Andererseits kann das Kabelgehäuse 80 auch allein der Verbindung und Ablage der Überlängen dienen, kann also auch das weitere Datenkabel 100 ein Glasfaserkabel sein.

Nach dem Zusammenstecken des Datenkabels 70 und des weiteren Datenkabels 100 wird jedenfalls das Kabelgehäuse 80 in dem Dichtbehälter 90 platziert und wird dieser in das Anschlussgehäuse 2 eingesetzt, und zwar mit der offenen Seite 90.1 nach unten. Das weitere Datenkabel 100 ist bzw. wird durch eine Anschlussstelle 7.2 in den Gehäuseinnenraum 4 verlegt, vorzugsweise von außen. Die Anschlussstelle 7.2 ist in diesem Fall aus einem Elastomerstopfen 110 und einem Adapter 111 aufgebaut, der in der Gehäusewand verrastet und den Elastomerstopfen 110 in Position hält.

Figur 7 zeigt das Anschlussgehäuse 2 mit der im Inneren fertigen Installation, also angeschlossenem und eingesetztem Kabelgehäuse 80 im Dichtbehälter 90. Die Öffnung 5 ist mit dem Deckel 6 verschlossen. Aus dem Anschlussgehäuse heraus erstreckt sich lediglich ein Anbindungsabschnitt 100.1 des weiteren Anschlusskabels 100 außerhalb des Anschlussgehäuses 2. Am Ende des Anbindungsabschnitts 100.1 ist der Stecker 102 angeordnet, dieser wird bis zu einer endgültigen Anbindung der Datennutzer- oder Datenverteilerstelle 16, bspw. also bspw. des entsprechenden Wohngebäudes, in einem Hohlkörper 120 oberhalb des Anschlussgehäuses 2 verwahrt. Der Hohlkörper 120 ist in einer Signalfarbe ausgeführt und dient zugleich als Verkehrsleitkegel 121.

Er kann die Position des Anschlussgehäuses 2 markieren und damit bspw. während der weiteren Bauarbeiten einer Beschädigung des Anschlussgehäuses 2 vorbeugen. Der Anbindungsabschnitt ist über eine nach unten weisende Öffnung 120.1 in den Hohlkörper 120 hineinverlegt und ist für die späteren Anschlussarbeiten gut zugänglich. Damit muss dann bspw. bauherrenseitig am Anschlussgehäuse 2 selbst bzw. in dessen Gehäuseinnenraum 4 gar nicht mehr hantiert werden. Der Anbindungsabschnitt kann aus dem Hohlkörper 120 genommen und in Richtung des Gebäudes verlegt werden, bspw. in das Gebäude hinein.

Der Hohlkörper 120 kann auch bereits vor der Situation gemäß Figur 4 auf dem Anschlussgehäuse 2 angeordnet sein und vor dem Deckel 6 für die Kabelarbeiten abgenommen werden; er kann aber andererseits auch erst im Zuge der Kabelarbeiten bereitgestellt und nach dem Einsetzen des vollständig angeschlossenen Kabelgehäuses 80 erstmalig auf dem Anschlussgehäuse 2 platziert werden.

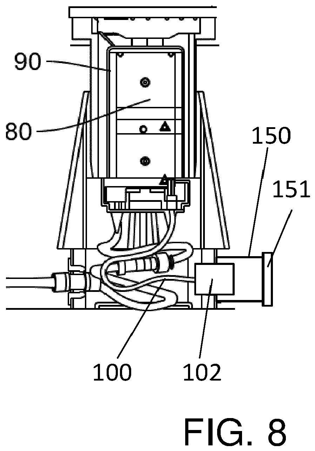

Figur 8 zeigt eine alternative Ausführungsform, bei welcher der Stecker 102 des weiteren Datenkabels 100 an dem Anschlussgehäuse befestigt ist. Nach außen wird er von einer Dose 150 geschützt. Diese weist einen Deckel 150 auf, durch Öffnen des Deckels 151 ist der Stecker 102 zum Anstecken eines dritten Datenkabels zugänglich. Bezüglich möglicher Details wird auf die Beschreibungseinleitung verwiesen.

## Patentansprüche

1. Verwendung eines Anschlussgehäuses (2) zum Bereitstellen einer Datenkabelanbindung, wobei
i) das Anschlussgehäuse (2), das einen Gehäuseinnenraum (4) begrenzt, in einen Boden (35) eingebaut wird,
ii) in dem Boden (35) ein Datenkabel (70) solchermaßen verlegt wird, dass ein endseitiger Anschlussabschnitt (70.1) des Datenkabels (70) in den Gehäuseinnenraum (4) mündet,
iii) der Anschlussabschnitt (70.1) des Datenkabels (70) zumindest abschnittsweise in einem Leerrohrsystem (45) verlegt ist, welches Leerrohrsystem (45) einen ersten Leerrohrabschnitt (51) und, in einer Längsrichtung des Datenkabels (70) zu dessen Ende (70.1.1) hin darauffolgend, einen zweiten Leerrohrabschnitt (52) aufweist,
iv) der zweite Leerrohrabschnitt (52) von dem Datenkabel (70) abgenommen wird, bevor dieses an ein dann in dem Anschlussgehäuse (2) angeordnetes Kabelgehäuse (80) angeschlossen wird.

2. Verwendung nach Anspruch 1, bei welcher der erste und der zweite Leerrohrabschnitt (51, 52) jeweils von einem gesonderten Leerrohrstück (61, 62) gebildet werden.

3. Verwendung nach Anspruch 2, bei welcher das erste und das zweite Leerrohrstück (61, 62) über ein Kupplungsstück (63) zusammengesteckt sind.

4. Verwendung nach einem der vorstehenden Ansprüche, bei welcher das Datenkabel (70) in dem Schritt gemäß Ziffer ii) in das Leerrohrsystem (45) eingebracht, also in den ersten und den zweiten Leerrohrabschnitt (51, 52) hineinverlegt wird.

5. Verwendung nach einem der vorstehenden Ansprüche, bei welcher ein Ende (61.1) des ersten Leerrohrabschnitts (51), welches dem zweiten Leerrohrabschnitt (52) entgegengesetzt liegt, an einer den Gehäuseinnenraum (4) begrenzenden Wand des Anschlussgehäuses (2) befestigt ist oder wird.

6. Verwendung nach einem der vorstehenden Ansprüche, bei welcher das Leerrohrsystem (45) zeitweilig in dem Anschlussgehäuse (2) verwahrt wird, also in dem Gehäuseinnenraum (4) untergebracht wird, wobei eine Öffnung (5) des Anschlussgehäuses (2), über die der Gehäuseinnenraum (4) zugänglich ist, mit einem Deckel (6) verschlossen wird.

7. Verwendung nach Anspruch 6, bei welcher, wenn das Leerrohrsystem (45) in dem Anschlussgehäuse (2) verwahrt wird, das Datenkabel (70) bereits in dem Leerrohrsystem (45) verlegt ist, also der in dem Leerrohrsystem (45) verlegte Anschlussabschnitt (70.1) des Datenkabels (70) zeitweilig in dem Anschlussgehäuse (2) verwahrt wird und somit vor dem Schritt gemäß Ziffer iv) in dem Gehäuseinnenraum (4) untergebracht wird.

8. Verwendung nach Anspruch 6 oder 7, bei welcher ein dem ersten Leerrohrabschnitt (51) entgegengesetztes Ende (62.2) des zweiten Leerrohrabschnitts (52) fluiddicht verschlossen ist oder wird, wenn das Leerrohrsystem (45) in dem Anschlussgehäuse (2) verwahrt wird.

9. Verwendung nach einem der vorstehenden Ansprüche, bei welcher das Datenkabel (70) an oder in dem Kabelgehäuse (80) mit einem weiteren Datenkabel (100) verbunden wird, wobei ein dem Kabelgehäuse (80) entgegengesetztes Ende des weiteren Datenkabels (100) mit einem Stecker (102) ausgestattet ist.

10. Verwendung nach Anspruch 9, bei welcher das weitere Datenkabel (100) durch eine den Gehäuseinnenraum (4) begrenzende Wand des Anschlussgehäuses (2) verlegt wird, also ein Anbindungsabschnitt (100.1) des weiteren Datenkabels (100) dann außerhalb des Anschlussgehäuses (2) angeordnet ist, und das Kabelgehäuse (80), über das die Datenkabel (70, 100) miteinander verbunden sind, in dem Gehäuseinnenraum (4) untergebracht ist oder wird.

11. Verwendung nach Anspruch 10, bei welcher zumindest ein Abschnitt des mit dem Stecker (102) ausgestatteten Anbindungsabschnitts (100.1) des weiteren Datenkabels (100) in einem Hohlkörper (120) aufbewahrt wird, der vertikal höher als das Anschlussgehäuse (2) platziert ist oder wird, vorzugsweise in einem Verkehrsleitkegel (121).

12. Verwendung nach Anspruch 11, bei welcher das weitere Datenkabel (100) aus dem Hohlkörper (120) herausgenommen wird und in dem Boden (35) verlegt wird.

13. Verwendung nach Anspruch 9, bei welcher der Stecker (102) an dem Anschlussgehäuse (2) lagefixiert ist.

14. Verfahren zum Bereitstellen einer Datenkabelanbindung, insbesondere gemäß einer Verwendung nach einem der vorstehenden Ansprüche, wobei
i) ein Anschlussgehäuse (2), das einen Gehäuseinnenraum (4) begrenzt, in einen Boden (35) eingebaut wird,
ii) in dem Boden (35) ein Datenkabel (70) solchermaßen verlegt wird, dass ein endseitiger Anschlussabschnitt (70.1) des Datenkabels (70) in den Gehäuseinnenraum (4) mündet,
iii) der Anschlussabschnitt (70.1) des Datenkabels (70) zumindest abschnittsweise in einem Leerrohrsystem (45) verlegt ist, welches Leerrohrsystem (45) einen ersten Leerrohrabschnitt (51) und, in einer Längsrichtung des Datenkabels (70) zu dessen Ende (70.1.1) hin darauffolgend, einen zweiten Leerrohrabschnitt (52) aufweist,
iv) der zweite Leerrohrabschnitt (52) von dem Datenkabel (70) abgenommen wird, bevor dieses an ein dann in dem Anschlussgehäuse (2) angeordnetes Kabelgehäuse (80) angeschlossen wird.

15. Kabelanbindungseinheit, die sich vorzugsweise in einer Verwendung nach einem der Ansprüche 1 bis 13 oder dem Verfahren nach Anspruch 14 ergibt, mit einem Anschlussgehäuses (2), einem Leerrohrsystem (45) und einem Datenkabel (70), wobei
das Anschlussgehäuse (2), das einen Gehäuseinnenraum (4) begrenzt, in den Boden (35) eingebaut ist,
und in dem Boden (35) das Datenkabel (70) solchermaßen verlegt ist, dass ein Anschlussabschnitt (70.1) des Datenkabels (70), der an einem Ende des Datenkabels (70) angeordnet ist, in den Gehäuseinnenraum (4) mündet,
der Anschlussabschnitt (70.1) des Datenkabels (70) zumindest abschnittsweise in einem Leerrohrsystem (45) verlegt ist, welches Leerrohrsystem (45) einen ersten Leerrohrabschnitt (51) und, in einer Längsrichtung des Datenkabels (70) zu dem Ende hin darauffolgend, einen zweiten Leerrohrabschnitt (52) aufweist,
wobei zwischen den Leerrohrabschnitten (51, 52) des Leerrohrsystems (45) eine Trennebene definiert ist, nämlich die Leerrohrabschnitte (51, 52) zusammengesetzt oder über eine Sollbruchstelle miteinander verbunden sind.
